(19) **Europäisches Patentamt European Patent Office Office européen des brevets**

(11) **EP 4 343 287 B1**

(12) **FASCICULE DE BREVET EUROPÉEN**

(45) Date de publication et mention
de la délivrance du brevet:
**06.08.2025  Bulletin 2025/32**

(51) Classification Internationale des Brevets (IPC):
***G01G 19/08*** *(2006.01)*

(21) Numéro de dépôt: **23194595.7**

(52) Classification Coopérative des Brevets (CPC):
**G01G 19/086**

(22) Date de dépôt: **31.08.2023**

(54) **PROCÉDÉ ET SYSTÈME DE DÉTERMINATION DE LA MASSE D'UN VÉHICULE**

VERFAHREN UND SYSTEM ZUR BESTIMMUNG DER MASSE EINES FAHRZEUGS

METHOD AND SYSTEM FOR DETERMINING THE MASS OF A VEHICLE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **02.09.2022  FR 2208841**

(43) Date de publication de la demande:
**27.03.2024  Bulletin 2024/13**

(73) Titulaires:
• **Centre National de la Recherche Scientifique
(CNRS)
75016 Paris (FR)**
• **Renault s.a.s
92100 Boulogne Billancourt (FR)**
• **Université de Technologie de Compiègne
60200 Compiègne (FR)**

(72) Inventeurs:
• **BOUDAOUD, Nassim
60150 LE PLESSIS BRION (FR)**
• **PHAN, Sok
92130 ISSY-LES-MOULINEAUX (FR)**
• **QUOST, Benjamin
60200 COMPIEGNE (FR)**
• **RANDON, Mathieu
78084 GUYANCOURT (FR)**
• **VON WISSEL, Dirk
91510 LARDY (FR)**

(74) Mandataire: **Casalonga
Casalonga & Partners
Bayerstraße 71/73
80335 München (DE)**

(56) Documents cités:
**EP-A2- 3 019 379**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne l'estimation d'une grandeur dynamique d'un véhicule automobile, notamment la masse d'un véhicule en déplacement.

La masse du véhicule évolue, elle peut varier très rapidement et de manière importante entre deux phases de roulage successives, par exemple en fonction d'un nombre de passagers ou d'un chargement. La masse du véhicule est une information utile à de nombreux systèmes équipant le véhicule automobile, tels que les systèmes d'amortissement piloté, de contrôle moteur (thermique, électrique ou hybride), de démarrage en côté, de détection de surcharge, de freinage, etc...

La masse du véhicule a donc une influence directe sur la consommation énergétique, le vieillissement et la tenue de route du véhicule.

Le comportement du moteur est ainsi adapté en fonction de la masse du véhicule sur un trajet.

Il existe principalement deux types de méthodes d'estimation d'une grandeur dynamique d'un véhicule automobile mises en œuvre à l'aide de dispositifs embarqués.

Les méthodes d'un premier type, dites « directes », utilisent un capteur spécifique pour mesurer directement un paramètre représentatif de la masse du véhicule. Il peut par exemple s'agir d'un capteur de débattement à ultra-sons, adapté pour mesurer la distance entre la caisse du véhicule et le sol, ou bien un angle représentatif de l'état de compression des suspensions. Les méthodes directes sont relativement précises mais nécessitent l'ajout d'un capteur coûteux.

Les méthodes dites « indirectes » utilisent des mesures réalisées par des capteurs non spécifiquement dédiés à la mesure d'un paramètre représentatif de la masse du véhicule qui estiment la masse à partir des mesures successives réalisées.

Les méthodes indirectes connues sont peu coûteuses, mais elles peuvent manquer de précision si elles ne prennent pas en compte un écart d'erreur du modèle.

La qualité d'une estimation de masse d'un véhicule dépend de la variété et de la qualité des capteurs et/ou des estimateurs embarqués dans le véhicule.

En effet, il est connu que l'estimation du couple moteur est plus précise dans un véhicule à moteur électrique que dans un véhicule à moteur thermique.

Certains contextes tels que les changements de rapports, les freinages, ou les accélérations brusques, peuvent placer les capteurs en dehors de leur domaine de validité.

Dans des conditions de roulage en pente ou lors d'accélérations franches, la masse du véhicule a un impact significatif sur la dynamique du véhicule ce qui rend favorable une estimation de la masse.

Certaines méthodes connues se basent sur une sélection des contextes favorables à une estimation de la masse. Toutefois, une telle approche est spécifique à chaque véhicule et traite difficilement la diversité des sources d'erreurs pouvant intervenir dans l'estimation de la masse.

D'autre part, la sélection des contextes réduit les contextes dans lesquels la masse du véhicule est estimable ce qui se traduit par une durée de convergence lente du procédé.

On connait le document FR 3 075 735 qui propose d'adapter la réponse du couple du moteur à l'enfoncement de la pédale d'accélération en fonction de la masse du véhicule. Toutefois, dans un tel procédé, la masse peut être surestimée ou sous-estimée en dans certains contextes de roulage du véhicule automobile.

Il est donc nécessaire d'estimer la masse du véhicule de manière précise.

La masse du véhicule influe sur les dépenses énergétiques des véhicules électriques ou hybrides. Les stratégies de gestion énergétiques utilisent cette information de masse pour optimiser le bilan carbone d'un véhicule hybride ou prédire l'autonomie d'un véhicule électrique. Une connaissance de la masse du véhicule permet de rendre ces stratégies énergétiques plus performantes. Cependant, une surestimation ou sous-estimation de la masse du véhicule dans certains contextes peut engendrer un comportement énergétique aberrant.

De plus, avec l'apparition des zones « zéro émissions » qui interdisent à un véhicule d'utiliser un moteur thermique dans certaines zones urbaines, il devient essentiel de prédire de façon robuste l'autonomie d'un véhicule hybride pour l'autoriser à pénétrer dans la zone « zéros émissions ».

On connait également le document FR 2 995 399 qui propose un procédé d'estimation de la masse d'un véhicule automobile en fonction d'une estimation de la pente à partir d'un accéléromètre et d'un capteur de vitesse d'une roue afin d'identifier la masse du véhicule comme une fonction de la mesure de l'accélération induite par la pente de la route et d'un couple résistant lié à cette pente sur une roue motrice du véhicule.

Le document EP3019379A2 divulgue une unité de commande électronique (ECU) automobile programmée pour estimer en temps réel une masse de véhicule.

Le but de l'invention est donc de proposer un procédé d'estimation ne nécessitant pas d'ajout de capteurs au véhicule, et qui soit capable d'estimer la masse du véhicule de manière précise malgré des erreurs de mesure probables des capteurs.

Un autre objectif de l'invention est de quantifier la précision du système d'estimation de la masse du véhicule en fonction des incertitudes de chaque capteur et du contexte de roulage du véhicule.

L'invention a pour objet un procédé de détermination de la masse d'un véhicule dans lequel :

- on estime une valeur de la masse du véhicule en temps réel à partir de données du véhicule, telles que la force propulsive du véhicule, la force résistive du véhicule, le coefficient de résistance au roulement du véhicule, la pente de la route, le rayon de la roue, l'inertie de la chaîne de traction et du rapport de réduction et on estime un résidu;
- on quantifie une incertitude capable de quantifier la précision de l'estimation de la masse du véhicule précédemment calculée en fonction du résidu ou erreur, des données du véhicule et de leurs incertitudes ; et
- on procède à une supervision a posteriori pour interpréter la précision de l'estimation de la masse et déterminer une estimation robuste de la masse et de sa précision sur un trajet donné.

Le procédé repose sur la propagation en temps réel des incertitudes des capteurs dans un modèle dynamique du véhicule.

Ce procédé fournit un intervalle de confiance en temps réel. Il est ensuite possible d'utiliser cet intervalle de confiance pour filtrer les valeurs de masses en fonction de leur précision.

Outre le gain apporté en facilitant la calibration des systèmes d'estimation de la masse du véhicule, il est important de connaître la précision de l'estimation de la masse du véhicule en fonction du contexte de roulage du véhicule pour une adaptation fiable des systèmes du véhicule.

Avantageusement, lors de l'estimation de la masse du véhicule, on estime la dynamique du véhicule en fonction des données du véhicule et on calcule par régression linéaire aux moindres carrés sur un intervalle de temps de la valeur estimée de la masse du véhicule et son résidu.

Avantageusement, lors de l'étape de quantification de l'incertitude de l'estimation de la masse du véhicule, on utilise les incertitudes des capteurs préalablement renseignées et on les propage, en temps réel, dans le modèle d'estimation de la dynamique du véhicule, puis dans le procédé d'estimation de la masse du véhicule.

Par exemple, les incertitudes d'estimation de la masse du véhicule correspondent à la somme d'une incertitude de la variance d'estimation qui quantifie la richesse des contextes observés sur l'intervalle de temps utilisé pour l'estimation de la masse, et d'une incertitude résultante sur la masse estimée calculée en fonction de la probabilité d'erreur ou incertitudes des données du véhicule et d'une incertitude sur les paramètres du modèle d'estimation dynamique du véhicule.

Avantageusement, lors de l'étape de supervision a posteriori, on compare la précision de l'estimation de la masse réalisée à l'étape de quantification de l'incertitude avec une précision de l'estimation stockée dans une unité de mémoire, ladite précision de l'estimation stockée étant égale à l'infini lors du début du trajet du véhicule.

Par exemple, lorsque la précision de l'estimation de la masse est inférieure à la précision de l'estimation stockée, cela signifie que la précision calculée est inférieure à celle qui est stockée, et on actualise la valeur de l'estimation de la masse avec sa précision. Ainsi, la valeur de l'estimation robuste de la masse est égale à l'estimation de la masse calculée à l'étape d'estimation de la masse et sa précision est égale à la précision calculée à l'étape de quantification de l'incertitude et on enregistre ces valeurs actualisées dans l'unité de mémoire.

Par exemple, lorsque la précision de l'estimation de la masse est supérieure ou égale à la précision de l'estimation stockée, la valeur de l'estimation de la masse avec sa précision ne sont pas actualisées.

Selon un deuxième aspect, l'invention concerne un système de détermination de la masse d'un véhicule comprenant :

- un module d'estimation d'une valeur de la masse du véhicule en temps réel à partir de données du véhicule, telles que la force propulsive du véhicule, le coefficient de résistance au roulement du véhicule, la pente de la route, le rayon de la roue, l'inertie de la chaîne de traction et du rapport de réduction et on estime son résidu;
- un module de quantification d'une incertitude configuré pour quantifier la précision de l'estimation de la masse du véhicule précédemment calculée en fonction du résidu ou erreur, des données du véhicule et de leurs incertitudes ; et
- un module de supervision a posteriori configuré pour interpréter la précision de l'estimation de la masse et déterminer une estimation robuste de la masse et de sa précision sur un trajet donné.

Avantageusement, le module d'estimation de la masse du véhicule en temps réel comprend un module d'estimation de la dynamique du véhicule en fonction des données du véhicule et un module de calcul par régression linéaire aux moindres carrés sur un intervalle de temps de la valeur estimée de la masse du véhicule et de son résidu.

Avantageusement, le module de quantification de l'incertitude comprend un module de quantification de l'incertitude de la variance d'estimation configuré pour quantifier la richesse des contextes observés sur l'intervalle de temps utilisé pour l'estimation de la masse, un module de détermination d'une incertitude résultante sur la masse estimée en fonction de la probabilité d'erreur ou incertitudes des données du véhicule et d'une incertitude sur les paramètres du modèle dynamique du véhicule utilisé pour calculer l'estimation de la masse du véhicule et un sommateur configuré pour additionner l'incertitude de la variance d'estimation et l'incertitude résultante de l'imprécision des données et paramètres du modèle dynamique de véhicule pour obtenir la précision de l'estimation de la masse du véhicule.

Avantageusement, le module de supervision a posteriori comprend un module de comparaison entre la précision de l'estimation de la masse et une précision de l'estimation stockée dans une unité de mémoire, ladite précision de l'estimation stockée étant égale à zéro lors du début du trajet du véhicule, lorsque la précision de l'estimation de la masse est inférieure à la précision de l'estimation stockée, un module de mise à jour de l'estimation de la masse avec sa précision est actualisé et l'unité de mémoire est configurée pour enregistrer ces valeurs actualisées.

Ainsi, la valeur de l'estimation robuste de la masse est égale à l'estimation de la masse enregistrée dans l'unité de mémoire du module de supervision et sa précision est égale à la précision enregistrée dans l'unité de mémoire du module de supervision.

Si, au contraire, la précision de l'estimation de la masse est supérieure à la précision de l'estimation stockée, cela signifie que la précision calculée est moins bonne que celle stockée. Le module de mise à jour de l'estimation de la masse avec sa précision n'est pas actualisé.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] représente schématiquement un système de détermination de la masse d'un véhicule selon l'invention ; et
[Fig 2] représente la synoptique d'un procédé de détermination de la masse d'un véhicule selon l'invention mise en œuvre par le système de la figure 1.

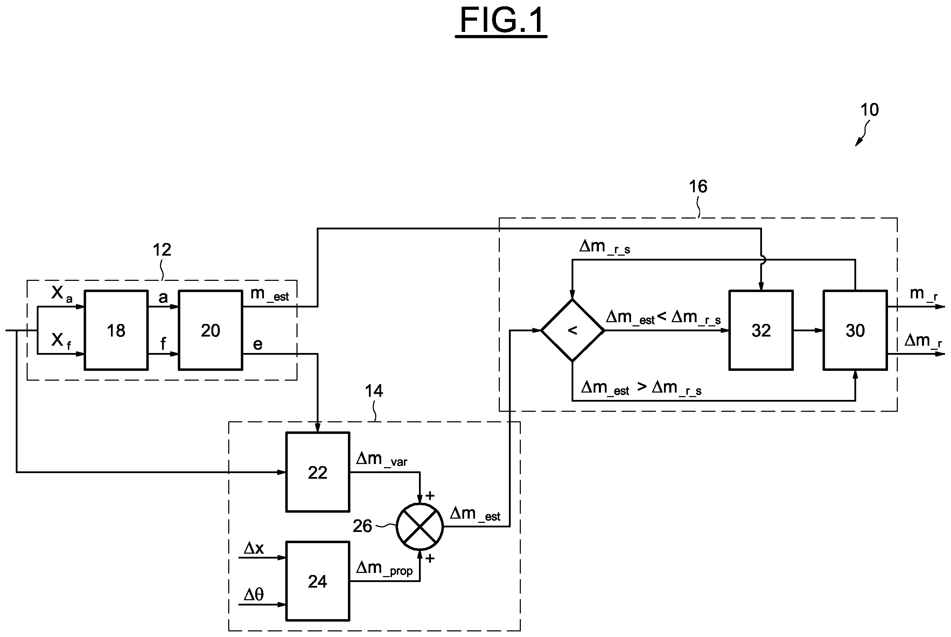

Le système 10 de détermination de la masse d'un véhicule automobile (non représenté), selon la figure 1, comprend un module 12 d'estimation de la masse $m_{est}$ du véhicule en temps réel à partir de données x du véhicule, telles que la force $F_m$ propulsive du véhicule, la force $F_{res}$ résistive du véhicule, le coefficient $C_{fric}$ de résistance au roulement du véhicule, la pente $\alpha$ de la route, le rayon R de la roue, l'inertie $J_m$ de la chaîne de traction et, le rapport de réduction $\mu$.

Le système 10 de détermination de la masse d'un véhicule comprend en outre un module 14 de quantification de l'incertitude capable de quantifier la précision $\Delta m_{est}$ de l'estimation de la masse $m_{est}$ du véhicule en fonction d'un résidu ou erreur issue du module 12 d'estimation de la masse, des données x du véhicule et de leurs incertitudes $\Delta x$.

Le système 10 de détermination de la masse d'un véhicule comprend en outre un module 16 de supervision a posteriori configuré pour interpréter la précision $\Delta m_{est}$ de l'estimation de la masse et fournir une estimation robuste de la masse $m_r$ et de sa précision $\Delta m_r$ sur un trajet.

Ainsi, on peut sélectionner a posteriori les estimations de masse dont la précision est satisfaisante.

Le module 12 d'estimation de la masse $m_{est}$ du véhicule en temps réel comprend un module 18 d'estimation de la dynamique du véhicule et un module 20 de calcul par régression linéaire aux moindres carrés sur une plage de temps de la masse $m_{est}$ du véhicule et du résidu e.

Le module 18 d'estimation de la dynamique du véhicule comprend un algorithme appliquant le principe fondamental de la dynamique sur le véhicule permettant d'obtenir l'équation suivante :

[Math 1]

$$m.\ddot{x} + \frac{J_m}{R.\mu^2}.\ddot{x} = F_m - m.g.sin(\alpha) - F_{res} - m.C_{fric}$$

Avec :

$F_m$, la force propulsive du véhicule,
$F_{res}$, la force résistive du véhicule, composée de l'action de la traînée aérodynamique et de l'action des forces de freinage,
$C_{fric}$, le coefficient de résistance au roulement du véhicule,
$\alpha$, la pente de la route,
R, le rayon de la roue,
$J_m$, l'inertie liée de la chaîne de traction,
m, la masse du véhicule, et
$\mu$, le rapport de réduction.

Les variables Fm, Fres, Cfric, Jm, $\mu$ et $\alpha$ sont calculées par des estimateurs (non représentés) présents dans les calculateurs embarqués du véhicule avec les mesures des capteurs. La méthode de calcul de ces estimateurs n'est pas décrite car elle dépend des capteurs embarqués dans le véhicule. On considère que ce sont les estimateurs qui fournissent la valeur d'intérêt avec une certaine précision (ou incertitude) renseignée dans le cahier des charges de l'estimateur.

Les coefficients g et R sont des constantes. R est renseigné dans la définition technique du véhicule.

En factorisant l'équation Math 1, on obtient l'équation suivante :

[Math 2]

$$m.(\ddot{x} + gsin(\alpha) + C_{fric}) = F_m - \frac{J_m}{R.\mu^2}.\ddot{x} - F_{res}$$

On peut ainsi regrouper les termes proportionnels à la masse dans une fonction a(t) et les termes indépendants de la masse dans une fonction f(t) :

[Math 3]

$$a(t) = \ddot{x}(t) + gsin(\alpha(t)) + C_{fric}$$

$$f(t) = F_m(t) - \frac{J_m}{R.\mu^2}.\ddot{x}(t) - F_{res}(t)$$

La fonction a(t) représente les accélérations du véhicule et correspond à un modèle de la cinématique du véhicule.

La fonction f(t) représente la somme des forces extérieures s'appliquant au véhicule en dehors de l'effet du poids et correspond à un modèle des forces extérieures du véhicule.

Les fonctions a(t) et f(t) peuvent s'écrire sous forme vectorielle selon les équations suivantes :

[Math 4]

$$x_a = [\ddot{x} \quad sin(\alpha) \quad C_{fric}] \quad \theta_a = \begin{bmatrix} 1 \\ g \\ 1 \end{bmatrix}$$

[Math 5]

$$x_f = [F_m \quad \frac{J_m.\ddot{x}}{\mu^2} \quad F_{res}] \quad \theta_f = \begin{bmatrix} 1 \\ 1 \\ -\frac{1}{R} \\ -1 \end{bmatrix}$$

Avec :
$\theta_a$, $\theta_f$, des paramètres prédéterminés et calibrés pour chaque véhicule.

On en déduit les fonctions a(t) et f(t) selon les équations suivantes :

[Math 6]

$$a(t) = x_a(t).\theta_a$$

[Math 7]

$$f(t) = x_f(t).\theta_f$$

Le module 20 de calcul par régression linéaire aux moindres carrés sur une plage de temps de la masse $m_{est}$ du véhicule et du résidu e est configuré pour estimer, en temps réel, la masse $m_{est}$ du véhicule à partir de la cinématique a(t) et des forces extérieures f(t) précédemment calculées aux équations Math 6 et Math 7.

Le module 20 de calcul par régression linéaire aux moindres carrés est configuré pour trouver la masse du véhicule capable de minimiser l'erreur e(t) selon l'équation suivante :

[Math 8]

$$e(t) = m.a(t) - f(t)$$

Sur un intervalle de temps $T_i$ avec n pas de temps :

[Math 9]

$$T_i = [t_{i-n}, t_i]$$

Le module 20 définit ensuite le carré des erreurs résiduelles comme fonction de coût $J(m_i)$ :

[Math 10]

$$J(m_i) = \|e(T_i)\|^2 = \sum_{t \epsilon T_i} (m_i.a(t) - f(t))^2$$

L'équation Math 10 est ensuite minimisée par la masse estimée optimale $m_{est,i}$ sur intervalle de temps $T_i$.

[Math 11]

$$m_{est,i} = \min_{\forall m} J(m_i)$$

Le module 20 calcule une estimation de la masse optimale $m_{\_est,i}$ sur intervalle de temps $T_i$ selon l'équation suivante :

[Math 12]

$$m_{est,i} = \frac{\sum_{t \epsilon T_i} a(t).f(t)}{\sum_{t \epsilon T_i} a(t)^2}$$

Ainsi, la masse du véhicule peut être estimée sur un intervalle de temps $T_i$ glissant. Cependant, la précision de l'estimation reste dépendante de la richesse des données collectées pendant cet intervalle de temps. Il est donc important de quantifier la précision du module 12 d'estimation conjointement avec le calcul de l'estimation de la masse, et en fonction de différentes sources d'incertitudes.

Le module 14 de quantification de l'incertitude est configuré pour quantifier la précision $\Delta m_{est}$ de l'estimation de la masse $m_{est}$ du véhicule en fonction d'un résidu e ou erreur issu du module 12 d'estimation de la masse, des données x du véhicule et de leurs incertitudes $\Delta x$.

L'incertitude ou précision de l'estimation de la masse peut provenir de plusieurs sources d'incertitudes.

Le module 14 de quantification de l'incertitude comprend un module 22 de quantification de la variance de résidu (ou d'erreur) d'estimation $\Delta m_{var}$ qui quantifie la richesse des contextes observés sur l'intervalle de temps $T_i$ utilisé pour l'estimation de la masse.

Par exemple, l'estimation de la masse est plus précise lorsqu'il y a eu de fortes accélérations pendant l'intervalle de temps. Il s'agit donc d'une incertitude liée à la variance du résidu d'estimation et dépend des données x du véhicule et du résidu e de l'estimation de la masse.

L'incertitude de la variance d'estimation $\Delta m_{var}$ est calculée comme étant le produit de la matrice de covariance inversée et de la variance du résidu e dans l'intervalle $T_i$ d'estimation selon l'équation suivante :

[Math 13]

$$\Delta m_{var} = \left(a(T_i)^T.a(T_i)\right)^{-1}.Var(e(T_i))$$

Avec la variance du résidu selon l'équation suivante :

[Math 14]

$$Var\big(e(T_i)\big) = \frac{1}{n}\sum_{t \epsilon T_i}(e(t) - \overline{e_i})^2$$

Avec :

[Math 15]

$$\overline{e_i} = \frac{1}{n}\sum_{t \epsilon T_i} e(t)$$

Le module 14 de quantification de l'incertitude comprend en outre un module 24 de détermination d'une incertitude résultante $\Delta m_{\_prop}$ sur la masse estimée en fonction de la probabilité d'erreur ou incertitudes $\Delta x$ des données x du véhicule et d'une incertitude $\Delta \theta$ sur les paramètres du modèle dynamique du véhicule utilisé dans les équations Math 4 à Math 7 ci-avant pour calculer l'estimation de la masse $m_{\_est}$ du véhicule.

La probabilité d'erreur ou incertitudes $\Delta x$ des données x du véhicule quantifie le bruit de mesure aléatoire des capteurs, ou les erreurs probables des estimateurs embarqués dans le véhicule. Ces incertitudes $\Delta x$ sont renseignées par le concepteur sous la forme d'intervalles.

L'incertitude $\Delta \theta$ sur les paramètres du modèle dynamique du véhicule provient de la quantité et de la qualité des données disponibles lors de la calibration du modèle dynamique du véhicule (incertitude sur g et R notamment).

La probabilité d'erreur ou incertitudes $\Delta x$ des données x du véhicule et l'incertitude $\Delta \theta$ sur les paramètres du modèle dynamique du véhicule sont ensuite propagées dans le module 24 de détermination d'une incertitude résultante $\Delta m_{prop.}$

Chaque terme intervenant dans l'estimation de la masse est entaché d'une incertitude quantifiée. Cette incertitude peut être modélisée comme une plage de valeurs probables autour de la valeur utilisée dans l'estimation de la masse. En linéarisant localement la fonction d'estimation autour de chaque terme entaché d'incertitude, il est possible de propager l'incertitude en multipliant chaque plage d'incertitude par la dérivée locale de l'estimation par rapport au terme en question (approximation de Laplace).

Le module 24 de détermination d'une incertitude résultante $\Delta m_{prop}$ utilise en entrée les incertitudes sur les données du véhicules $\Delta x_a$ et $\Delta x_f$, représentant respectivement les incertitudes des accélérations du véhicule et la somme des forces extérieures s'appliquant au véhicule.

Les incertitudes $\Delta x_a$ et $\Delta x_f$ sur les données du véhicule peuvent être déterminées en temps réel par le calculateur du véhicule ou prédéterminées par le concepteur du véhicule et sont déterminées selon les équations suivantes :

[Math 16]

$$\Delta x_a = [\Delta \ddot{x} \quad \sin(\Delta \alpha) \quad \Delta C_{fric}]$$

[Math 17]

$$\Delta x_f = [\Delta F_m \quad \Delta\left(\frac{J_m \cdot \ddot{x}}{\mu^2}\right) \quad \Delta F_{res}]$$

Le module 24 de détermination d'une incertitude résultante $\Delta m_{\_prop}$ recroît également en entrée les incertitudes $\Delta \theta_a$ et $\Delta \theta_f$ sur les paramètres du modèle dynamique du véhicule définies par le concepteur du véhicule au moment de la calibration et sont déterminées selon les équations suivantes :

[Math 18]

$$\Delta \theta_a = \begin{bmatrix} 0 \\ \Delta g \\ 0 \end{bmatrix}$$

[Math 19]

$$\Delta\theta_f = \begin{bmatrix} 0 \\ \Delta(\dfrac{1}{R}) \\ 0 \end{bmatrix}$$

En propageant les incertitudes Δx$_a$ et Δx$_f$, Δθ$_a$ et Δθ$_f$ dans les équations Math 6 et Math 7 ci-dessus, on obtient :

[Math 20]

$$\Delta a(t) = \Delta x_a(t).\left|\frac{\partial a}{\partial x_a}\right| + \left|\frac{\partial a}{\partial \theta_a}\right|.\Delta\theta_a$$

[Math 21]

$$\Delta f(t) = \Delta x_f(t).\left|\frac{\partial f}{\partial x_f}\right| + \left|\frac{\partial f}{\partial \theta_f}\right|.\Delta\theta_f$$

Les fonctions a(t) et f(t) représentant respectivement les accélérations du véhicule et la somme des forces extérieures s'appliquant au véhicule sont linéaires, leur dérivation s'écrit comme suit :

[Math 22]

$$\left|\frac{\partial a}{\partial x_a}\right| = \left|\frac{\partial}{\partial x_a}.(x_a.\theta_a)\right| = \theta_a$$

[Math 23]

$$\left|\frac{\partial f}{\partial x_f}\right| = \left|\frac{\partial}{\partial x_f}.(x_f.\theta_f)\right| = \theta_f$$

[Math 24]

$$\left|\frac{\partial a}{\partial \theta_a}\right| = \left|\frac{\partial}{\partial \theta_a}.(x_a.\theta_a)\right| = x_a$$

[Math 25]

$$\left|\frac{\partial f}{\partial \theta_f}\right| = \left|\frac{\partial}{\partial \theta_f}.(x_f.\theta_f)\right| = x_f$$

On obtient ainsi l'expression de propagation des incertitudes de mesure et de modélisation dans le modèle de véhicule selon les équations suivantes :

[Math 26]

$$\Delta a(t) = \Delta x_a(t).|\theta_a| + |x_a(t)|.\Delta\theta_a$$

[Math 27]

$$\Delta f(t) = \Delta x_f(t).|\theta_f| + |x_f(t)|.\Delta\theta_f$$

Ainsi, pour chaque instant t'dans l'intervalle de temps T$_i$ à n échantillons de temps, on obtient l'incertitude résultante Δm$_{prop}$ sur la masse estimée selon l'équation suivante :

[Math 28]

$$\Delta m_{prop} = \sum_{t' \epsilon T_i} \Delta a(t') . \left| \frac{\partial m_{est}}{\partial a(t')} \right| + \sum_{t' \epsilon T_i} \Delta f(t') . \left| \frac{\partial m_{est}}{\partial f(t')} \right|$$

Ce qui, après dérivation de la fonction d'estimation équivaut à l'équation suivante :

[Math 29]

$$\Delta m_{prop} = |m_{est}| . \left( \sum_{t' \epsilon T_i} \Delta a(t') . \left| \frac{f(t')}{a(T_i)^T . f(T_i)} - \frac{2a(t')}{a(T_i)^T . a(T_i)} \right| \right.$$
$$\left. + \sum_{t' \epsilon T_i} \Delta f(t') . \left| \frac{a(t')}{a(T_i)^T . f(T_i)} \right| \right)$$

Le module 14 de quantification de l'incertitude comprend en outre un sommateur 26 configuré pour additionner l'incertitude de la variance d'estimation $\Delta m_{var}$ et l'incertitude résultante $\Delta m_{prop}$ pour obtenir la précision $\Delta m_{est}$ de l'estimation de la masse $m_{est}$ du véhicule :

[Math 30]

$$\Delta m_{est} = \Delta m_{var} + \Delta m_{prop}$$

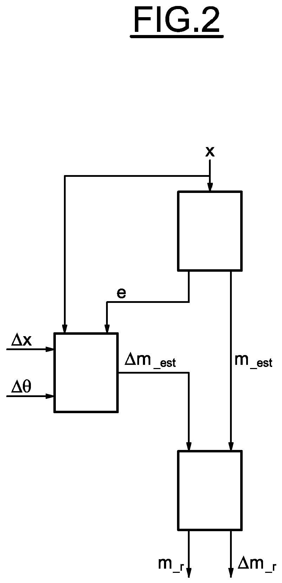

La précision $\Delta m_{est}$ de l'estimation de la masse $m_{est}$ du véhicule est quantifiée conjointement avec l'estimation de la masse $m_{est}$ du véhicule ce qui permet de fournir en temps réel un intervalle de confiance sur la qualité de l'estimation de la masse par le module 12 d'estimation de la masse.
Cette précision est ensuite utilisée pour sélectionner les estimations ayant un niveau de précision satisfaisant tout en connaissant la précision atteinte sur un trajet du véhicule.
Le module 16 de supervision a posteriori est configuré pour interpréter la précision $\Delta m_{est}$ de l'estimation de la masse et fournir une estimation robuste de la masse $m_r$ et de sa précision $\Delta m_r$ sur un trajet.
Le module 16 de supervision a posteriori comprend un module 28 de comparaison entre la précision $\Delta m_{est}$ de l'estimation de la masse et une précision de l'estimation $\Delta m_r$ stockée dans une unité de mémoire 30. La précision de l'estimation $\Delta m_r$ stockée est égale à zéro lors du début du trajet du véhicule.
Lorsque la précision $\Delta m_{est}$ de l'estimation de la masse est inférieure à la précision de l'estimation $\Delta m_{r\_s}$ stockée, cela signifie que la précision $\Delta m_{est}$ calculée est meilleure que celle stockée. Un module 32 de mise à jour de actualise l'estimation de la masse avec sa précision. Ainsi, la valeur de l'estimation robuste de la masse $m_r$ est issue de l'estimation de la masse calculée par le module 12 et sa précision $\Delta m_{est}$ est issue du module 14 de quantification de l'incertitude.
L'unité de mémoire 30 enregistre ces nouvelles valeurs.
Si, au contraire, la précision $\Delta m_{est}$ de l'estimation de la masse est supérieure à la précision de l'estimation $\Delta m_{r\_s}$ stockée, cela signifie que la précision $\Delta m_{est}$ calculée est moins bonne que celle stockée. Le module 32 de mise à jour de l'estimation de la masse avec sa précision n'est pas actualisé.
Grâce au module 16 de supervision a posteriori, la convergence est assurée par une amélioration de la précision d'estimation tout au long du trajet du véhicule.
Tel qu'illustré sur la figure 2, le procédé 40 de détermination de la masse d'un véhicule comprend trois étapes principales 42, 44, 46, à savoir une étape 42 d'estimation de la masse $m_{est}$ du véhicule en temps réel à partir de données x du véhicule, telles que la force $F_m$ propulsive du véhicule, la force $F_{res}$ résistive du véhicule, le coefficient $C_{fric}$ de résistance au roulement du véhicule, la pente $\alpha$ de la route, le rayon R de la roue, l'inertie $J_m$ de la chaîne de traction et du rapport de réduction $\mu$, une étape 44 de quantification de l'incertitude capable de quantifier la précision $\Delta m_{est}$ de l'estimation de la masse $m_{est}$ du véhicule en fonction d'un résidu e ou erreur issu du module 12 d'estimation de la masse, des données x du véhicule et de leurs incertitudes $\Delta x$ et une étape 46 de supervision a posteriori configurée pour interpréter la précision $\Delta m_{est}$ de l'estimation de la masse et fournir une estimation robuste de la masse $m_r$ et de sa précision $\Delta m_r$ sur un trajet.
Lors de l'étape 42 d'estimation de la masse $m_{est}$ du véhicule, on utilise un modèle dynamique du véhicule et on calcule une valeur estimée de la masse du véhicule selon les équations ci-dessus Math 1 à Math 12, ainsi qu'un résidu e.

Lors de l'étape 44 de quantification de l'incertitude $\Delta m_{est}$ de l'estimation de la masse $m_{est}$ du véhicule, on calcule les incertitudes et on les propage, en temps réel, dans le modèle dynamique du véhicule utilisé lors de l'étape 42 d'estimation de la masse $m_{est}$ du véhicule.

Les incertitudes correspondent à la somme d'une incertitude de la variance d'estimation $\Delta m_{var}$ qui quantifie la richesse des contextes observés sur l'intervalle de temps $T_i$ utilisé pour l'estimation de la masse calculée selon les équations Math 13 à Math 15 ci-dessus et d'une incertitude résultante $\Delta m_{prop}$ sur la masse estimée calculée en fonction de la probabilité d'erreur ou incertitudes $\Delta x$ des données x du véhicule et d'une incertitude $\Delta\theta$ sur les paramètres du modèle dynamique du véhicule utilisé dans les équations Math 4 à Math 7 ci-avant pour calculer l'estimation de la masse $m_{est}$ du véhicule.

L'incertitude résultante $\Delta m_{prop}$ sur la masse estimée est calculée selon les équations Math 16 à Math 29 ci-dessus.

Lors de l'étape 46 de supervision a posteriori, on compare la précision $\Delta m_{est}$ de l'estimation de la masse réalisée à l'étape 44 de quantification de l'incertitude avec une précision de l'estimation $\Delta m_r$ stockée dans une unité de mémoire 30. La précision de l'estimation $\Delta m_r$ stockée est égale à zéro lors du début du trajet du véhicule.

Lorsque la précision $\Delta m_{est}$ de l'estimation de la masse est inférieure à la précision de l'estimation $\Delta m_{r\_s}$ stockée, cela signifie que la précision $\Delta m_{est}$ calculée est meilleure que celle stockée et on actualise la valeur de l'estimation de la masse avec sa précision. Ainsi, la valeur de l'estimation robuste de la masse $m_r$ est égale à l'estimation de la masse $m_{est}$ calculée à l'étape 42 d'estimation de la masse et sa précision $\Delta m_{est}$ est égale à la précision calculée à l'étape 44 de quantification de l'incertitude.

On enregistre ces nouvelles valeurs dans l'unité de mémoire 30.

Si, au contraire, la précision $\Delta m_{est}$ de l'estimation de la masse est supérieure à la précision de l'estimation $\Delta m_{r\_s}$ stockée, cela signifie que la précision $\Delta m_{est}$ calculée est moins bonne que celle stockée. La valeur de l'estimation de la masse avec sa précision ne sont pas actualisées.

Grace à l'invention, on obtient une estimation de la masse d'un véhicule robuste aux différentes sources d'incertitudes qui sont spécifiques à un trajet donné, à un véhicule ou à un style de conduite particulier. La précision fournie conjointement avec l'estimation de la masse permet d'utiliser l'information de masse en fonction du niveau de confiance atteint sur le trajet.

## Revendications

**1.** Procédé (40) de détermination de la masse ($m_r$) à l'aide d'un module (12) d'estimation de la masse d'un véhicule dans lequel :

- on estime une valeur de la masse ($m_{est}$) du véhicule en temps réel à partir de données (x) du véhicule, telles que la force ($F_m$) propulsive du véhicule, la force ($F_{res}$) résistive du véhicule, le coefficient ($C_{fric}$) de résistance au roulement du véhicule, la pente ($\alpha$) de la route, le rayon (R) de la roue, l'inertie ($J_m$) de la chaîne de traction et du rapport de réduction ($\mu$) et on estime un résidu (e); **caractérisé en ce que** :

- on quantifie une incertitude capable de quantifier la précision ($\Delta m_{est}$) de l'estimation de la masse ($m_{est}$) du véhicule précédemment calculée en fonction du résidu (e), des données (x) du véhicule et de leurs incertitudes ($\Delta x$) ; et
- on procède à une supervision a posteriori pour interpréter la précision ($\Delta m_{est}$) de l'estimation de la masse et déterminer une estimation robuste de la masse ($m_r$) et de sa précision ($\Delta m_r$) sur un trajet donné.

**2.** Procédé (40) selon la revendication 1, dans lequel lors de l'estimation de la masse ($m_{est}$) du véhicule, on utilise un modèle d'estimation de la dynamique du véhicule en fonction des données (x) du véhicule et on calcule par régression linéaire aux moindres carrés sur un intervalle de temps ($T_i$) de la valeur estimée de la masse ($m_{est}$) du véhicule et le résidu (e).

**3.** Procédé (40) selon la revendication 2, dans lequel lors de l'étape (44) de quantification de l'incertitude ($\Delta m_{est}$) de l'estimation de la masse ($m_{est}$) du véhicule, on calcule des incertitudes des capteurs et on les propage, en temps réel, dans le modèle d'estimation de la dynamique du véhicule utilisé lors de l'étape d'estimation de la masse ($m_{est}$) du véhicule.

**4.** Procédé (40) selon la revendication 3, dans lequel les incertitudes de l'estimation correspondent à la somme d'une incertitude de la variance d'estimation ($\Delta m_{var}$) qui quantifie la richesse des contextes observés sur l'intervalle de temps ($T_i$) utilisé pour l'estimation de la masse, et d'une incertitude résultante ($\Delta m_{prop}$) sur la masse estimée calculée en fonction de la probabilité d'erreur ($\Delta$x) des données (x) du véhicule et d'une incertitude ($\Delta\theta$) sur les paramètres du modèle d'estimation dynamique du véhicule.

**5.** Procédé (40) selon l'une quelconque des revendications précédentes, dans lequel lors de l'étape (46) de supervision a posteriori, on compare la précision ($\Delta m_{est}$) de l'estimation de la masse réalisée à l'étape (44) de quantification de l'incertitude avec une précision de l'estimation ($\Delta m_r$) stockée dans une unité de mémoire (30), ladite précision de l'estimation ($\Delta m_r$) stockée étant égale à l'infini lors du début du trajet du véhicule.

**6.** Procédé (40) selon la revendication 5, dans lequel lorsque la précision ($\Delta m_{est}$) de l'estimation de la masse est inférieure à la précision de l'estimation ($\Delta m_{r\_s}$) stockée, on actualise la valeur de l'estimation de la masse avec sa précision, et on enregistre ces valeurs actualisées dans l'unité de mémoire (30).

**7.** Procédé (40) selon la revendication 5, dans lequel lorsque la précision ($\Delta m_{est}$) de l'estimation de la masse est supérieure à la précision de l'estimation ($\Delta m_{r\_s}$) stockée, la valeur de l'estimation de la masse avec sa précision ne sont pas actualisées.

**8.** Système (10) de détermination de la masse ($m_r$) d'un véhicule comprenant :

- un module (12) d'estimation d'une valeur de la masse ($m_{est}$) du véhicule en temps réel à partir de données (x) du véhicule, telles que la force ($F_m$) propulsive du véhicule, la force ($F_{res}$) résistive du véhicule, le coefficient ($C_{fric}$) de résistance au roulement du véhicule, la pente ($\alpha$) de la route, le rayon (R) de la roue, l'inertie ($J_m$) de la chaîne de traction et du rapport de réduction ($\mu$) et on estime un résidu (e); **caractérisé en ce qu'**il comprend :

- un module (14) de quantification d'une incertitude configuré pour quantifier la précision ($\Delta m_{est}$) de l'estimation de la masse ($m_{est}$) du véhicule précédemment calculée en fonction du résidu (e), des données (x) du véhicule et de leurs incertitudes ($\Delta$x) ; et
- un module (16) de supervision a posteriori configuré pour interpréter la précision ($\Delta m_{est}$) de l'estimation de la masse et déterminer une estimation robuste de la masse ($m_r$) et de sa précision ($\Delta m_r$) sur un trajet donné.

**9.** Système (10) selon la revendication 8, dans lequel le module (12) d'estimation de la masse ($m_{est}$) du véhicule en temps réel comprend un module (18) d'estimation de la dynamique du véhicule en fonction des données (x) du véhicule et un module (20) de calcul par régression linéaire aux moindres carrés sur un intervalle de temps ($T_i$) de la valeur estimée de la masse ($m_{est}$) du véhicule et le résidu (e).

**10.** Système (10) selon la revendication 9, dans lequel le module (14) de quantification de l'incertitude comprend un module (22) de quantification de l'incertitude de la variance d'estimation ($\Delta m_{var}$) configuré pour quantifier la richesse des contextes observés sur l'intervalle de temps ($T_i$) utilisé pour l'estimation de la masse, un module (24) de détermination d'une incertitude résultante ($\Delta m_{prop}$) sur la masse estimée en fonction de la probabilité d'erreur ($\Delta$x) des données (x) du véhicule et d'une incertitude ($\Delta\theta$) sur les paramètres du modèle dynamique du véhicule utilisé pour calculer l'estimation de la masse ($m_{est}$) du véhicule et un sommateur (26) configuré pour additionner l'incertitude de la variance d'estimation ($\Delta m_{var}$) et l'incertitude résultante ($\Delta m_{prop}$) pour obtenir la précision ($\Delta m_{est}$) de l'estimation de la masse ($m_{est}$) du véhicule.

**11.** Système (10) selon l'une quelconque des revendications 8 à 10, dans lequel le module (16) de supervision a posteriori comprend un module (28) de comparaison entre la précision ($\Delta m_{est}$) de l'estimation de la masse et une précision de l'estimation ($\Delta m_r$) stockée dans une unité de mémoire (30), ladite précision de l'estimation ($\Delta m_r$) stockée étant égale à l'infini lors du début du trajet du véhicule, lorsque la précision ($\Delta m_{est}$) de l'estimation de la masse est inférieure à la précision de l'estimation ($\Delta m_{r\_s}$) stockée, un module (32) de mise à jour de l'estimation de la masse avec sa précision est actualisé, et l'unité de mémoire (30) étant configurée pour enregistrer ces valeurs actualisées.

**Patentansprüche**

**1.** Verfahren (40) zur Bestimmung der Masse ($m_r$) unter Verwendung eines Moduls (12) zur Schätzung der Masse eines Fahrzeugs, wobei:

- ein Wert der Masse ($m_{est}$) des Fahrzeugs in Echtzeit aus Daten (x) des Fahrzeugs, wie der Antriebskraft ($F_m$) des Fahrzeugs, der Widerstandskraft ($F_{res}$) des Fahrzeugs, dem Rollwiderstandskoeffizienten ($C_{fric}$) des Fahrzeugs,

der Steigung ($\alpha$) der Straße, dem Radius (R) des Rads, der Trägheit ($J_m$) des Antriebsstrangs und dem Untersetzungsverhältnis ($\mu$), geschätzt wird und ein Rückstand (e) geschätzt wird; **dadurch gekennzeichnet, dass**:

- eine Unsicherheit quantifiziert wird, die in der Lage ist, die Genauigkeit ($\Delta m_{est}$) der Schätzung der Masse ($m_{est}$) des Fahrzeugs zu quantifizieren, die zuvor in Abhängigkeit von dem Rückstand (e), den Daten (x) des Fahrzeugs und ihrer Unsicherheiten ($\Delta x$) berechnet wurde; und
- eine nachträgliche Überwachung durchgeführt wird, um die Genauigkeit ($\Delta m_{est}$) der Schätzung der Masse zu interpretieren und eine robuste Schätzung der Masse ($m_r$) und ihrer Genauigkeit ($\Delta m_r$) auf einer gegebenen Strecke zu bestimmen.

2. Verfahren (40) nach Anspruch 1, wobei bei der Schätzung der Masse ($m_{est}$) des Fahrzeugs ein Modell zur Schätzung der Fahrzeugdynamik in Abhängigkeit von den Daten (x) des Fahrzeugs verwendet wird und durch lineare Regression der kleinsten Quadrate über ein Zeitintervall ($T_i$) des geschätzten Wertes der Masse ($m_{est}$) des Fahrzeugs und des Rückstands (e) berechnet wird.

3. Verfahren (40) nach Anspruch 2, wobei bei dem Schritt (44) zur Quantifizierung der Unsicherheit ($m\Delta_{est}$) der Schätzung der Masse ($m_{est}$) des Fahrzeugs Unsicherheiten der Sensoren berechnet und in Echtzeit in das Modell zur Schätzung der Fahrzeugdynamik übertragen werden, das im Schritt zur Schätzung der Masse ($m_{est}$) des Fahrzeugs verwendet wird.

4. Verfahren (40) nach Anspruch 3, wobei die Unsicherheiten der Schätzung der Summe einer Unsicherheit der Schätzvarianz ($\Delta m_{var}$) entsprechen, die die Fülle der beobachteten Kontexte über das für die Schätzung der Masse verwendete Zeitintervall ($T_i$) quantifiziert, und einer resultierenden Unsicherheit ($\Delta m_{prop}$) über die geschätzte Masse, die in Abhängigkeit von der Fehlerwahrscheinlichkeit ($\Delta x$) der Daten (x) des Fahrzeugs und einer Unsicherheit ($\Delta\theta$) über die Parameter des Modells zur Schätzung der Fahrzeugdynamik berechnet wird.

5. Verfahren (40) nach einem der vorhergehenden Ansprüche, wobei bei dem Schritt (46) der nachträglichen Überwachung die Genauigkeit ($\Delta m_{est}$) der in dem Schritt (44) der Quantifizierung der Unsicherheit durchgeführten Schätzung der Masse mit einer Genauigkeit der in einer Speichereinheit (30) gespeicherten Schätzung ($\Delta m_r$) verglichen wird, wobei die Genauigkeit der gespeicherten Schätzung ($\Delta m_r$) bei Beginn der Fahrt des Fahrzeugs gleich unendlich ist.

6. Verfahren (40) nach Anspruch 5, wobei, wenn die Genauigkeit ($\Delta m_{est}$) der Schätzung der Masse kleiner ist als die Genauigkeit der gespeicherten Schätzung ($\Delta m_{r\_s}$), der Wert der Schätzung der Masse mit seiner Genauigkeit aktualisiert wird und diese aktualisierten Werte in der Speichereinheit (30) gespeichert werden.

7. Verfahren (40) nach Anspruch 5, wobei, wenn die Genauigkeit ($\Delta m_{est}$) der Schätzung der Masse größer ist als die Genauigkeit der gespeicherten Schätzung ($\Delta m_{r\_s}$), der Wert der Schätzung der Masse mit seiner Genauigkeit nicht aktualisiert wird.

8. System (10) zur Bestimmung der Masse ($m_r$) eines Fahrzeugs, umfassend:

- ein Modul (12) zur Schätzung eines Wertes der Masse ($m_{est}$) des Fahrzeugs in Echtzeit aus Daten (x) des Fahrzeugs, wie der Antriebskraft ($F_m$) des Fahrzeugs, der Widerstandskraft ($F_{res}$) des Fahrzeugs, dem Rollwiderstandskoeffizienten ($C_{fric}$) des Fahrzeugs, der Steigung ($\alpha$) der Straße, dem Radius (R) des Rads, der Trägheit ($J_m$) des Antriebsstrangs und dem Untersetzungsverhältnis ($\mu$), und ein Rückstand (e) geschätzt wird; **dadurch gekennzeichnet, dass** es Folgendes umfasst:

- ein Modul (14) zur Quantifizierung einer Unsicherheit, das so konfiguriert ist, dass es die Genauigkeit ($\Delta m_{est}$) der Schätzung der Masse ($m_{est}$) des Fahrzeugs quantifiziert, die zuvor in Abhängigkeit von dem Rückstand (e), der Daten (x) des Fahrzeugs und ihrer Unsicherheiten ($\Delta x$) berechnet wurde; und
- ein Modul (16) zur nachträglichen Überwachung, das so konfiguriert ist, dass es die Genauigkeit ($\Delta m_{est}$) der Schätzung der Masse interpretiert und eine robuste Schätzung der Masse ($m_r$) und ihrer Genauigkeit ($\Delta m_r$) auf einer gegebenen Strecke bestimmt.

9. System (10) nach Anspruch 8, wobei das Modul (12) zur Schätzung der Masse ($m_{est}$) des Fahrzeugs in Echtzeit ein Modul (18) zur Schätzung der Fahrzeugdynamik in Abhängigkeit von den Daten (x) des Fahrzeugs und ein Modul (20) zur Berechnung durch lineare Regression der kleinsten Quadrate über ein Zeitintervall ($T_i$) des geschätzten Wertes der Masse ($m_{est}$) des Fahrzeugs und des Rückstands (e) umfasst.

10. System (10) nach Anspruch 9, wobei das Modul (14) zur Quantifizierung der Unsicherheit ein Modul (22) zur Quantifizierung der Unsicherheit der Schätzvarianz ($\Delta m_{var}$), das so konfiguriert ist, dass es die Fülle der beobachteten Kontexte über das für die Massenschätzung verwendete Zeitintervall ($T_i$) quantifiziert, ein Modul (24) zur Bestimmung einer resultierenden Unsicherheit ($\Delta m_{prop}$) über die geschätzte Masse in Abhängigkeit von der Fehlerwahrscheinlichkeit ($\Delta x$) der Daten (x) des Fahrzeugs und einer Unsicherheit ($\Delta \theta$) über die Parameter des dynamischen Fahrzeugmodells, das zur Berechnung der Schätzung der Masse ($m_{est}$) des Fahrzeugs verwendet wird, und einen Summierer (26) umfasst, der so konfiguriert ist, dass er die Unsicherheit der Schätzvarianz ($\Delta m_{var}$) und die resultierende Unsicherheit ($\Delta m_{prop}$) addiert, um die Genauigkeit ($\Delta m_{est}$) der Schätzung der Masse ($m_{est}$) des Fahrzeugs zu erhalten.

11. System (10) nach einem der Ansprüche 8 bis 10, wobei das Modul (16) zur nachträglichen Überwachung ein Modul (28) zum Vergleich zwischen der Genauigkeit ($\Delta m_{est}$) der Schätzung der Masse und einer Genauigkeit der in einer Speichereinheit (30) gespeicherten Schätzung ($\Delta m_r$) umfasst, wobei die Genauigkeit der gespeicherten Schätzung ($\Delta m_r$) bei Beginn der Fahrt des Fahrzeugs gleich unendlich ist, wenn die Genauigkeit ($\Delta m_{est}$) der Schätzung der Masse geringer ist als die Genauigkeit der gespeicherten Schätzung ($\Delta m_{r\_s}$), wobei ein Modul (32) zur Aktualisierung der Schätzung der Masse mit seiner Genauigkeit aktualisiert wird, und wobei die Speichereinheit (30) so konfiguriert ist, dass sie diese aktualisierten Werte speichert.

**Claims**

1. A method (40) for determining the mass ($m_r$) using a module (12) for estimating the mass of a vehicle wherein:

   - a value of the mass ($m_{est}$) of the vehicle is estimated in real time from data (x) of the vehicle, such as the propulsion force ($F_m$) of the vehicle, the resistive force ($F_{res}$) of the vehicle, the rolling resistance coefficient ($C_{fric}$) of the vehicle, the slope ($\alpha$) of the road, the radius (R) of the wheel, the inertia ($J_m$) of the traction chain and the reduction ratio ($\mu$) and a residue (e) is estimated; **characterised in that**:

      - an uncertainty capable of quantifying the accuracy ($\Delta m_{est}$) of the estimate of the mass ($m_{est}$) of the vehicle, which is previously calculated depending on the residue (e), the data (x) of the vehicle and the uncertainties ($\Delta x$) thereof, is quantified; and
      - a posteriori supervision is carried out to interpret the accuracy ($\Delta m_{est}$) of the mass estimate and determine a robust estimate of the mass ($m_r$) and the accuracy ($\Delta m_r$) thereof over a given route.

2. The method (40) according to claim 1, wherein when estimating the mass ($m_{est}$) of the vehicle, a model for estimating the vehicle dynamics depending on the data (x) of the vehicle is used and the estimated value of the mass ($m_{est}$) of the vehicle and the residue (e) are calculated by linear least squares regression over a time interval ($T_i$).

3. The method (40) according to claim 2, wherein during the step (44) of quantifying the uncertainty ($m\Delta_{est}$) of the estimate of the mass ($m_{est}$) of the vehicle, uncertainties of the sensors are calculated and propagated, in real time, in the vehicle dynamics estimation model used during the step of estimating the mass ($m_{est}$) of the vehicle.

4. The method (40) according to claim 3, wherein the uncertainties of the estimate correspond to the sum of an uncertainty of the estimation variance ($\Delta m_{var}$) which quantifies the richness of the observed contexts over the time interval ($T_i$) used for the estimate of the mass, and a resulting uncertainty ($\Delta m_{prop}$) over the estimated mass calculated depending on the probability of error ($\Delta x$) of the data (x) of the vehicle and an uncertainty ($\Delta \theta$) on the parameters of the vehicle dynamics estimation model.

5. The method (40) according to any one of the preceding claims, wherein during the a posteriori supervision step (46), the accuracy ($\Delta m_{est}$) of the mass estimate performed in the uncertainty quantification step (44) is compared with an accuracy of the estimate ($\Delta m_r$) stored in a memory unit (30), said accuracy of the stored estimate ($\Delta m_r$) being equal to infinity at the start of the vehicle's journey.

6. The method (40) according to claim 5, wherein when the accuracy ($\Delta m_{est}$) of the mass estimate is less than the accuracy of the stored estimate ($\Delta m_{r\_s}$), the value of the mass estimate is updated with the accuracy thereof, and these updated values are recorded in the memory unit (30).

7. The method (40) according to claim 5, wherein when the accuracy ($\Delta m_{est}$) of the mass estimate is greater than the accuracy of the stored estimate ($\Delta m_{r\_s}$), the value of the mass estimate with the accuracy thereof are not updated.

8. A system (10) for determining the mass ($m_r$) of a vehicle comprising:

- a module (12) for estimating a value of the mass ($m_{est}$) of the vehicle in real time from data (x) of the vehicle, such as the propulsive force ($F_m$) of the vehicle, the resistive force ($F_{res}$) of the vehicle, the rolling resistance coefficient ($C_{fric}$) of the vehicle, the slope ($\alpha$) of the road, the radius (R) of the wheel, the inertia ($J_m$) of the traction chain and the reduction ratio ($\mu$) and a residue (e) is estimated; **characterised in that** it comprises:

- a module (14) for quantifying an uncertainty configured to quantify the accuracy ($\Delta m_{est}$) of the estimate of the mass ($m_{est}$) of the vehicle previously calculated depending on the residue (e), the data (x) of the vehicle and the uncertainties ($\Delta x$) thereof; and
- an a posteriori supervision module (16) configured to interpret the accuracy ($\Delta m_{est}$) of the mass estimate and determine a robust estimate of the mass ($m_r$) and the accuracy ($\Delta m_r$) thereof over a given path.

9. The system (10) according to claim 8, wherein the module (12) for estimating the mass ($m_{est}$) of the vehicle in real time comprises a module (18) for estimating the vehicle dynamics depending on the data (x) of the vehicle and a module (20) for calculating, by linear least squares regression over a time interval ($T_i$), the estimated value of the mass ($m_{est}$) of the vehicle and the residue (e).

10. The system (10) according to claim 9, wherein the uncertainty quantification module (14) comprises a module (22) for quantifying the uncertainty of the estimation variance ($\Delta m_{var}$) configured to quantify the richness of the observed contexts over the time interval ($T_i$) used for the mass estimate, a module (24) for determining a resulting uncertainty ($\Delta m_{prop}$) over the estimated mass depending on the probability of error ($\Delta x$) of the data (x) of the vehicle and an uncertainty ($\Delta \theta$) on the parameters of the dynamic model of the vehicle used to calculate the estimate of the mass ($m_{est}$) of the vehicle and a summer (26) configured to add the uncertainty of the estimation variance ($\Delta m_{var}$) and the resulting uncertainty ($\Delta m_{prop}$) to obtain the accuracy ($\Delta m_{est}$) of the estimate of the mass ($m_{est}$) of the vehicle.

11. The system (10) according to any one of claims 8 to 10, wherein the a posteriori supervision module (16) comprises a module (28) for comparing between the accuracy ($\Delta m_{est}$) of the mass estimate and an accuracy of the estimate ($\Delta m_r$) stored in a memory unit (30), said accuracy of the stored estimate ($\Delta m_r$) being equal to infinity at the start of the vehicle's journey, when the accuracy ($\Delta m_{est}$) of the mass estimate is less than the accuracy of the stored estimate ($\Delta m_{r\_s}$), a module (32) for updating the mass estimate with the accuracy thereof is updated, and the memory unit (30) being configured to record these updated values.

FIG.1

# FIG.2

## RÉFÉRENCES CITÉES DANS LA DESCRIPTION

**Documents brevets cités dans la description**

- FR 3075735
- FR 2995399
- EP 3019379 A2